# EUROPEAN PATENT SPECIFICATION

(11) **EP 4 393 824 B1**
(45) Date of publication and mention of the grant of the patent: **04.06.2025**
(21) Application number: 22216805.6
(22) Date of filing: 27.12.2022
(51) Int. Cl.: B64D 37/04, B64D 37/06, B64D 37/30, F17C 1/00

(54) **HYDROGEN RECEPTACLE WITH GRAPHENE LAYER AND MANUFACTURING METHOD THEREFOR**
WASSERSTOFFBEHÄLTER MIT GRAPHENSCHICHT UND HERSTELLUNGSVERFAHREN DAFÜR
RÉCEPTACLE D'HYDROGÈNE AVEC COUCHE DE GRAPHÈNE ET SON PROCÉDÉ DE FABRICATION

(43) Date of publication of application: 03.07.2024
(73) Proprietor: Airbus Operations GmbH, 21129 Hamburg (DE); Airbus Defence and Space GmbH, 82024 Taufkirchen (DE); Airbus Operations, S.L.U., 28906 Getafe (ES)
(72) Inventor: Linde, Peter, 21129 Hamburg (DE); Blanco-Varela, Maria Tamara, 28906 Getafe (ES); Lenczowski, Blanka, 82024 Taufkirchen (DE); Graevendieck, Gülcan, 21129 Hamburg (DE); Lage, Paulo, Bristol, BS34 7PA (GB)
(74) Representative: KASTEL Patentanwälte PartG mbB

(56) References cited:
- EP-B1- 2 902 692
- CN-A- 113 072 063
- DE-A1- 102021 103 918
- US-A1- 2018 283 613
- US-A1- 2019 190 041
- US-A1- 2022 003 362

## Description

The invention relates to a manufacturing method for manufacturing a wall component of a hydrogen receptacle for a vehicle, especially an aircraft, comprising a receptacle wall made from fibre reinforced composite material. Further the invention relates to a manufacturing method for manufacturing such a hydrogen receptacle. Further, the invention relates to an aircraft equipped with at least one of such hydrogen receptacles.

The hydrogen receptacle may be a tank for storing hydrogen, especially liquid hydrogen or a hydrogen pipe for conducting hydrogen, especially liquid hydrogen. Preferred embodiments of the invention relate to a manufacturing method for manufacturing a hydrogen tank wall, especially a cryogenic tank wall. Further, preferred embodiments of the methods according to the invention relate to manufacturing a hydrogen tank, especially a cryogenic tank, for a vehicle, especially an aircraft, comprising a tank wall component having a substrate of fibre reinforced composite material. The principles of preferred embodiments also apply to other lightweight hydrogen receptacles used on an aircraft, especially pipes.

For technical background, reference is made to the following citations:
[1] US 2015/0 336 680 A1
[2] EP 3 498 664 B1
[3] Wikipedia - Graphene, download from https://en.wikipedia.org/wiki/Graphene on 27.10.2022
[4] Wikipedia - Graphene production technique, download from https://en.wikipedia.org/wiki/Graphene_production_techniques on 27.10.2022
[5] US 2018/283613 A1
[6] EP 2 902 692 B1
[7] DE 10 2021 103 918 A1
[8] US 2022/003362 A1
[9[ US 2019/190041 A1
[10] CN 113 072 063 A

Cryogenic storage tanks may be used for storing liquid hydrogen, for example, for use as a fuel for driving a vehicle. The vehicle may be a motor vehicle such as a car, lorry or train or may be an aircraft. Citations [1] and [2] disclose a tank for the cryogenic storage of hydrogen and an aircraft with a tank installed therein. Liquid hydrogen stored within the tank is used as a fuel for the aircraft engine in place of carbon-based fuels such as kerosene. The cryogenic storage tank is typically substantially cylindrical and includes openings for allowing the tank to be filled with hydrogen as well as to supply the stored liquid hydrogen to the engine. Further, the aircraft is equipped with a hydrogen duct system including hydrogen pipes for conducting hydrogen through the aircrafts.

Lightweight energy storage is a key topic for next generation aircrafts. Storage systems with high energy density are one of the key challenges for future electrical propulsion-based systems. Different energy storage systems are available today, whereas pressurized (~700 bar) or cryogenic Hydrogen (14 K < T < 21 K) paired with fuel cells or direct burn are interesting solutions for next flight vehicles. Hydrogen (H2) is the molecule with lowest density and smallest diameter in nature, which is why the storage in tanks is very complex and hardly achievable without leakage over longer durations.

Hydrogen offers high energy densities, whereas the storage technique (cryogenic, compressed, solid state/absorbed) is a key issue. Hydrogen can be compressed and/or cooled down to cryogenic temperatures to increase the volumetric and gravimetric energy density. Usually, complex tank systems are needed with individual requirements to the materials, design and working principle e.g., regarding operational safety.

Compressed and cryogenic hydrogen are the techniques of choice for today's vehicles, like cars or airplanes. Cryogenic tanks can achieve the lowest added weight wherein, with the present known technologies, about 0.2 kg - 0.5 kg tank weight is needed per kg stored H2. Conventional tanks work with applied inner pressure to avoid gas ingress from outside. As tank material typically metals, metal alloys and composites are in use. Full composite tanks can be challenging because of the long in-service life of civil aircraft. Hydrogen leakage may also be an issue.

An object of the invention is to improve the manufacturing of hydrogen receptacles, especially tanks or pipes, made of composite material for storing or conducting hydrogen such that they can be filled more quickly or can conduct hydrogen with a higher velocity.

The object is achieved by the subject-matter of the independent claims.

Preferred embodiments are subject-matters of the dependent claims.

Preferred embodiments of the invention provides an enhanced manufacturing of a hydrogen receptacle for a vehicle, especially an aircraft, comprising a receptacle wall made from fibre reinforced composite material defining a volume for storing or conducting hydrogen, especially liquid hydrogen, wherein the receptacle wall comprises an inner layer of graphene.

Preferably, the inner layer of graphene is a coating, especially a liner, of an inner surface of the receptacle wall.

Preferably, the inner layer of graphene is a coating of the complete inner surface of the receptacle wall.

Preferably, the inner layer of graphene is a layer electrically connected to a ground or mass potential.

Preferably, the inner layer of graphene is a cover over voids in the fibre reinforced composite material.

Preferably, the inner layer of graphene is a layer configured to suppress permeation of hydrogen through the receptacle wall.

Preferably, the receptacle wall is made from CFRP.

Preferably, the receptacle wall comprises a CFRP laminate having a combination of at least two of the layers selected from the group of a resin rich layer made from polymer matrix, a CFRP ply with fibres in a first direction, and a CFRP ply with fibres in a second direction.

Preferably, the receptacle wall comprises a CFRP laminate having at least one CFRP ply with unidirectional fibres sandwiched between resin rich layers made from polymer matrix.

In some embodiments, the hydrogen receptacle achieved by the manufacturing method is a hydrogen tank for storing hydrogen wherein the receptacle wall is a tank wall. In some embodiments, the hydrogen receptacle is a hydrogen pipe for conducting hydrogen wherein the receptacle wall is a pipe wall.

The invention provides a manufacturing method for manufacturing a hydrogen receptacle wall component, comprising the steps of:
a) providing a wall material made from fibre reinforced composite material,
b) coating the wall material with graphene layer, and
c) forming the hydrogen receptacle wall component from the wall material.

Preferably, step a) comprises:
providing a carbon fibre reinforced plastic composite tape.

Preferably, step a) comprises:
providing a laminate from fibre reinforced composite material, especially CFRP.

According to the invention, step a) comprises:
a3) providing a tape made from fibre reinforced composite material.

According to the invention, step b) is conducted before step c).

Preferably, step b) comprises:
covering voids of the fibre reinforced composite material with the graphene layer.

Preferably, step b) comprises:
coating an inner surface of the wall material which in use forms an inner receptacle wall surface with the graphene layer.

Preferably, step b) comprises:
spraying of multiple graphene flakes.

According to the invention, step b) comprises:
covering one side of the tape from fibre reinforced composite material with graphene.

Preferably, step b) comprises:
applying graphene layer on an CFRP tape.

According to the invention, step c) comprises:
applying the wall material to a forming tool.

Preferably, step c) comprises:
winding the wall material in form of the tap on a mandrel.

Preferably, step c) comprises:
pressing the wall material against the forming tool with a compaction tool, especially a compaction roller.

Preferably, step c) comprises:
forming the wall material to a cylindrical wall.

According to the invention, step c) comprises:
applying several layers of wall material onto the forming tool, especially the mandrel, wherein a first layer coated with graphene is applied with the graphene coated side contacting the forming tool.

Preferably, step c) comprises:
wind an inner layer of CFRP LH2 tank with a tape, especially a CFRP tape, with graphene layer applied and then wind remaining CFRP plies on a mandrel.

Preferably, step c) comprises:
curing the wall material after forming.

Preferably, wall components for hydrogen tanks or hydrogen pipes are manufactured with a wall material of fibre reinforced composite material, especially CFRP, and an inner layer of graphene.

According to another aspect, the invention provides a hydrogen receptacle manufacturing method for manufacturing a hydrogen receptacle for a vehicle, especially an aircraft, wherein the hydrogen receptacle comprises a receptacle wall made from fibre reinforced composite material defining a volume for storing or conducting hydrogen, especially liquid hydrogen, the hydrogen receptacle manufacturing method comprising the steps of:
aa) conducting the manufacturing method according to any of the aforementioned embodiments in order to provide at least one or several wall components and
d) assembling several wall components in order to achieve the hydrogen receptacle, especially the hydrogen tank or the hydrogen pipe.

Preferably, one or several cylindrical receptacle components with an inner graphene layer are provided. The cylindrical receptacle components may be tank components or pipe components.

Preferably, step d) comprises assembling at least one cylindrical wall component made from fibre reinforced composite material with an inner graphene layer and a first and a second dome shaped end component, especially from metal, in order to achieve the hydrogen tank.

In a preferred embodiment, the hydrogen receptacle manufacturing method comprises:
g) testing the hydrogen receptacle under pressure.

In a preferred embodiment, the hydrogen receptacle manufacturing method comprises:
h) test the hydrogen receptacle for permeation.

Preferably, the method according to any of the aforementioned embodiments comprises:
e) verifying electrical ground function of the graphene layer.

Preferably, the method according to any of the aforementioned embodiments comprises:
f) verifying permeation suppression of the graphene layer.

According to another aspect, the invention provides an aircraft comprising at least one hydrogen consumer and at least one hydrogen receptacle, especially hydrogen tank and/or hydrogen pipe, achievable by the hydrogen receptacle manufacturing method according to any of the aforementioned embodiments or comprising at least one hydrogen receptacle wall component achievable by the wall component manufacturing method according to any of the aforementioned embodiments.

Preferred embodiments of the invention relate to manufacturing of CFRP LH2 tank with inside surface layer of multi-functional graphene. Similar principles also apply to other components of a LH2 system containing LH2 such as pipes made from CFRP.

The graphene layer may function against static electricity and permeation. Preferred embodiments of the hydrogen tank achievable by the method have the advantage that they can be filled more quickly. Preferred embodiments of the hydrogen pipe achievable by the method have the advantage that they can conduct hydrogen with a higher velocity.

Preferred embodiments of the hydrogen receptacles such as tanks and pipes have the advantage that they have less H2 permeation.

The graphene layer may provide a smooth surface without voids.

In preferred embodiments, the graphene layer may improve the possibility to clean the inner side of the receptacle such as the tank or the pipe.

In preferred embodiments, the graphene layer may enable or improve a laminar flow inside the receptacle especially along the inner receptacle wall side. Preferred embodiments of the hydrogen receptacle have the advantage of less accumulation of foreign matter on the inner receptacle wall.

Filling of LH2 needs to be speedy. At fast fillings in receptacles or containers not made of a conducting material, e.g., metal, static electricity build-up can occur. Furthermore, the issue of hydrogen permeation exists for pure CFRP tanks or pure CFRP pipes.

Graphene is a good electrical conductor, and has shown promising results together with CFRP for e.g., leading away energy at lightning strike. In preferred embodiments, this feature of graphene is used to suppress static electricity build-up. At the same time, graphene is a dense material on a microscopic scale, used e.g., as tightening layer against liquids, and may be helpful for suppressing permeation.

In preferred embodiments, graphene is used as multi-functional material.

Preferred embodiments of the invention have advantages with relation to low or even zero emission vehicles, especially aircrafts, for a better liquid hydrogen storage, in order to improve CFRP tanks or CFRP pipes, avoiding or reducing static electricity, and/or avoiding or reducing permeation.

Preferred embodiments of the invention have advantages in relation to liquid hydrogen tanks, CFRP pressure vessels, reducing porosity in CFRP, reducing accretion build-up, particle build-up, trapped bubbles, and/or enhancing laminar/turbulent flow.

Some embodiments of the invention relate to manufacturing of a multi-functional graphene layer for LH2 tank for improved maintenance and permeation characteristics.

Until now, all pressure vessels used over long term with liquid content needed inspection and maintenance procedures. Included were cleaning of accretion, chemical build-up. This is greatly simplified and improved by internal surface characteristics displaying no or minimal pores. The strive towards CFRP for LH2 tanks will require solutions for this. A material that is well compatible with CFRP, which displays no pores and offers high suppression of permeation is graphene. This can be applied e.g., by spraying.

Embodiments of the invention are explained below referring to the accompanying drawings in which:
- Fig. 1: shows a perspective schematic view of an aircraft as an example for a vehicle equipped with a hydrogen tank, especially a cryogenic tank for storing liquid hydrogen (LH2);
- Fig. 2: shows a schematic block diagram of a manufacturing apparatus for manufacturing the hydrogen tank according to a comparative example of a method which is not within scope of the claims;
- Fig. 3: shows a schematic perspective view of an example for a wall component manufacturing unit;
- Fig. 4: shows a schematic view of a graphene applying unit together with a wall component to be coated with graphene according to a manufacturing method according to a comparative example which is not claimed, but given for explanatory purposes only;
- Fig. 5: a perspective view of a graphene spray head used in manufacturing of a graphene layer for the tank of Fig. 1, 4 and 7 together with an enlarged view of a detail thereof;
- Fig. 6: a schematic view of a graphene flake as shown in the detail of Fig. 5;
- Fig. 7: a partly perspective, partly sectional schematic view of lightweight prior art hydrogen receptacles which are uncoated during filling with LH2 together with enlarged views of details thereof;
- Fig. 8: a sectional view of a lightweight prior art hydrogen tank with an tank wall partly filled with liquid hydrogen (LH2) together with an enlarged view of a detail thereof near an upper wall;
- Fig. 9: a sectional view similar to the detail view of Fig. 8 for a hydrogen tank achievable by manufacturing according to an embodiment of the invention wherein the hydrogen tank wall is coated with graphene, together with an even more enlarged view of a further detail thereof;
- Fig. 10: a view similar to Fig. 9 wherein a further detail of a part of the tank wall is shown, together with the more enlarged view of the detail thereof;
- Fig. 11: a sectional view through a wall material for a wall component of the hydrogen receptacle made of CFRP which is uncoated;
- Fig. 12: a view similar to Fig. 8 wherein a hydrogen tank is formed from the uncoated wall component of Fig. 11 and wherein a situation is shown that could happen when the hydrogen tank is partly filled with liquid hydrogen;
- Fig. 13: detailed sectional views of a wall area of a hydrogen receptacle that is made from the wall material of Fig. 11 wherein situations are shown that could occur when liquid hydrogen flows over different surface areas thereof in case that they are uncoated;
- Fig. 14: a detailed sectional view of a further situation that could happen with the uncoated wall component during a longer use;
- Fig. 15: a view as in Fig. 14 showing a situation that could happen during an even longer use of the uncoated wall component;
- Fig. 16: a schematic view of an example of the wall material as shown as in Fig. 11 during an application of graphene before a wall of the receptacle wall component is formed therefrom according to an embodiment of the invention for the manufacturing thereof;
- Fig. 17: a perspective view of a further embodiment of a wall component manufacturing unit wherein the wall material coated with graphene as shown in Fig. 16 is used;
- Fig. 18: a view as in Fig. 13 to 15 wherein the receptacle wall is coated with graphene according to an embodiment of the invention; and
- Fig. 19: a view similar to Fig. 12, wherein the receptacle wall is coated with graphene according to an embodiment of the invention.

In the following, a hydrogen receptacle 1 for a vehicle 12, especially an aircraft, and manufacturing methods therefore are explained with reference to the accompanying drawings. The hydrogen receptacle 1 is configured to contain hydrogen, especially liquid hydrogen (referred to as LH2 in the following). Especially, the hydrogen receptacle 1 is configured to store or to conduct LH2. The hydrogen receptacle comprises a receptacle wall 2 made from fibre reinforced composite material defining a volume 3 for storing or conducting hydrogen, especially LH2. The receptacle wall 2 comprises an inner layer 4 of graphene. Examples for the hydrogen receptacle 1 are hydrogen tanks 10 and hydrogen pipes 5. The principles of the preferred embodiments will be described mainly with relation to tanks, but they are also applicable to pipes or other hydrogen receptacles 1.

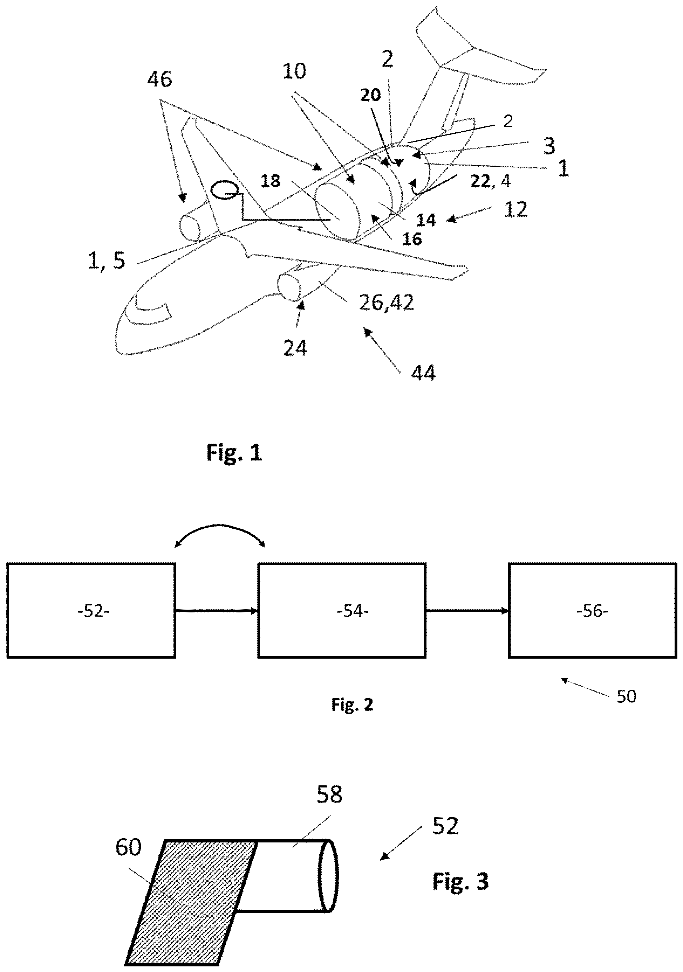

Fig. 1 shows an aircraft, especially an airplane 44 as an example for a vehicle 12 in which a hydrogen tank 10 is used. The airplane 44 has a propulsion system 46 with turbines 42 as engines 26. The turbines 42 are configured to burn hydrogen supplied from the hydrogen tank 10. Further, the airplane 44 may be equipped with fuel cells (not shown), wherein hydrogen is supplied to the fuel cells from the hydrogen tank 10.

The hydrogen tank 10 has, e.g., a cylindrical shape. The hydrogen tank 10 is configured as a cryogenic tank for storing LH2 at cryogenic temperatures. At least one wall component 14 of the tank, such as for example the middle cylindrical part 16 is made of fibre reinforced composite material, especially CFRP (=carbon fibre reinforced plastic). The hydrogen tank 10 further comprises end caps 18 which may also be made from fibre reinforced composite such as CFRP (so that they are further examples for the fibre reinforced composite wall component 14) or are - as presently preferred - made from metal. The inner surface 20 of the wall component 14 is coated with a coating 22 of graphene. Here, the inner surface 20 is the surface having contact with the LH2.

Fig. 2 shows a schematic block diagram of an exemplary manufacturing apparatus 50 for manufacturing the hydrogen tank 10. The manufacturing apparatus 50 comprises a wall component manufacturing unit 52, a graphene applying unit 54 and a tank assembly unit 56. The wall component manufacturing unit 52 is configured for manufacturing the wall component 14 made from fibre reinforced composite material. The graphene applying unit 54 is configured to apply a layer 4 or liner of graphene onto at least one surface, especially the inner surface 20, of the wall component 14. The applying of graphene may be made by any suitable graphene production technique as known, for example, from [3] or [4]. Preferably, the graphene applying unit 54 is configured to apply the graphene by spraying multiple graphene flakes onto the surface. The tank assembly unit 56 is configured to assemble the at least one wall component 14 coated by graphene together with further components to form the hydrogen tank 10.

Fig. 3 shows a schematic perspective view of an example for the wall component manufacturing unit 52. The wall component manufacturing unit 52 comprises a winder 58 onto which several layers of CFRP laminates 60 can be wound in order to achieve the wall component 14.

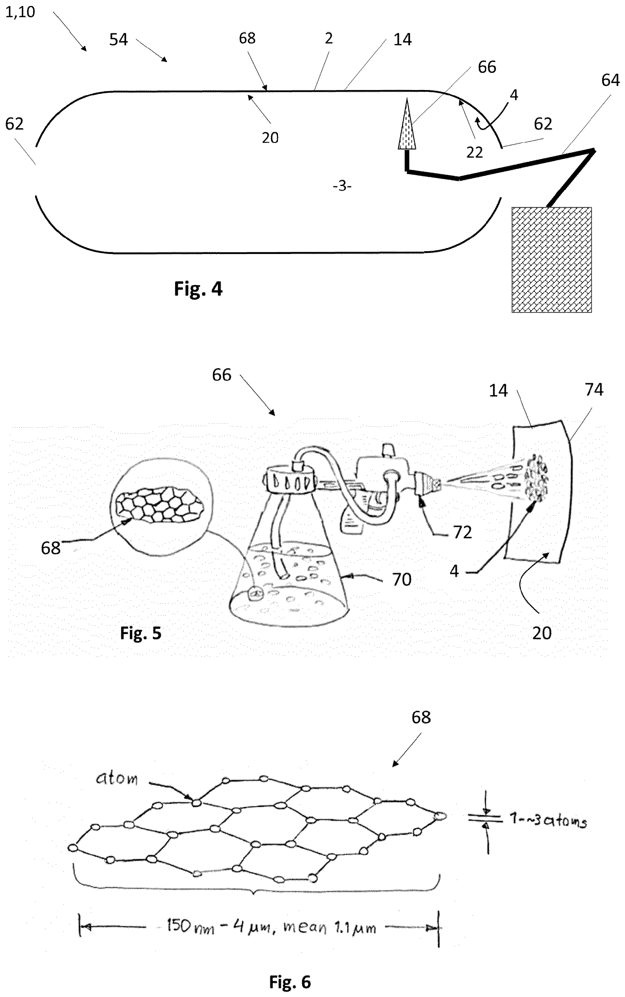

Fig. 4 shows a schematic view of a comparative example of the graphene applying unit 54 together with the wall component 14 to be coated with graphene. The wall component 14 is manufactured and provided as an essentially cylindrical wall element with openings 62. The graphene applying unit 54 comprises a robotic arm 64 adapted and configured to pass through the opening 64 and equipped with a graphene spray head 66 as shown in Fig. 5. The graphene applying unit 54 is configured to coat the inner surface of at least one wall component 14 of the hydrogen tank 10 with graphene.

As mentioned above, there are different ways to apply a graphene layer at the receptacle inner surface 20, such as the inner surface of the hydrogen tank 10. There are different ways to apply a graphene layer at the tank inner surface. One way is by spraying a solution containing graphene "flakes", shown in Fig. 5.

Fig. 5 shows an example of the graphene spray head 66. Especially, Fig. 5 shows the application of the graphene layer 4 on the surface 20 by spraying graphene flakes 68. The detail of Fig. 5 and Fig. 6 show an enlarged view of such a graphene flake 68. A graphene flake 68 is 150nm to 4µm long and has a thickness of about 1 to 3 carbon atoms. The graphene spray head 66 comprises a container 70 with solvent containing graphene flakes 68 and a spray gun 72. The Fig. 5 and 6 display a detail of one graphene "flake" 68, which is 150 nm to 4 mm long and consists of one layer of carbon-atoms. The solvent is kept in the container 70 which is connected to the spray gun 72, by which the solvent is sprayed onto the surface 20.

It is clear from Figs. 2 to 5, that the manufacturing method as described before also works for manufacturing the hydrogen pipe 5.

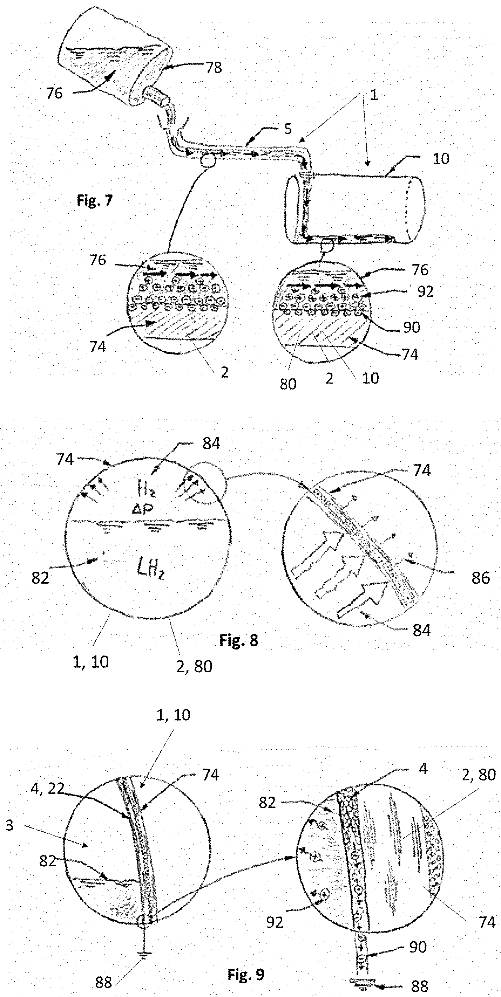

In the following, several advantages and effects of the hydrogen receptacle 1 with inner graphene liner will be described referring to Figs. 7 to 15, 18 and 19. Therein, Figs. 7, 8 and 11 to 15 show different situations wherein hydrogen receptacles 1 with receptacle walls 2 made of CFRP which are still not provided with a graphene layer are used while the Figs. 9, 10, 18 and 19 show the same situations wherein the inner surface 20 of the receptacle walls 2 made from the same wall materials 74 is provided with the graphene layer 4 in accordance with embodiments of the invention.

Referring now to Fig. 7, lightweight hydrogen receptacles 1 the walls 2 of which are not coated are shown during filling with a liquid 76 from a liquid container 78. Further, Fig. 7 shows enlarged details of an area near a wall of the hydrogen pipe 5 and of an area near the bottom wall of the hydrogen tank 10 shown in an uncoated state in order to explain the effect of static electricity in liquid containers.

It is well established that when a gas or liquid passes over a surface at a sufficient velocity, static electricity may be built up by charged particles 90, 92, on the one hand in the gas/liquid, and on the other hand at the surface 20. A well-known example in aeronautics is static electricity on the wing covers.

The phenomenon appears typically when the surface 20 is not made of an electrically conducting material, i.e., the charged particles cannot be led away. Static electricity may be built up when a liquid is flushed at a high velocity over a surface 20, such as is the case when filling a tank 10. In Fig. 7 liquid 76 from a container 78 is filled through a pipe 5 into a tank 10 at a high velocity. Tank 10 and pipe 5 is made of a non-conducting material. Static electricity is built up in pipe 5 and in tank 10.

Fig. 8 shows a lightweight hydrogen tank 10 with a still uncoated tank wall 80 partly filled with LH2 82 together with an enlarged view of a detail thereof near an upper wall portion. Fig. 8 shows a LH2 tank 10. The illustration on the left shows a cross-section of a cylindrical tank with hydrogen in both liquid 82 and gas form 84. The illustration on the right shows a detail with gas permeation 86 through material of the tank wall 80. In this instance the tank wall 80 is built of CFRP, and will therefore display particular permeation, if no separate measures are taken to suppress it.

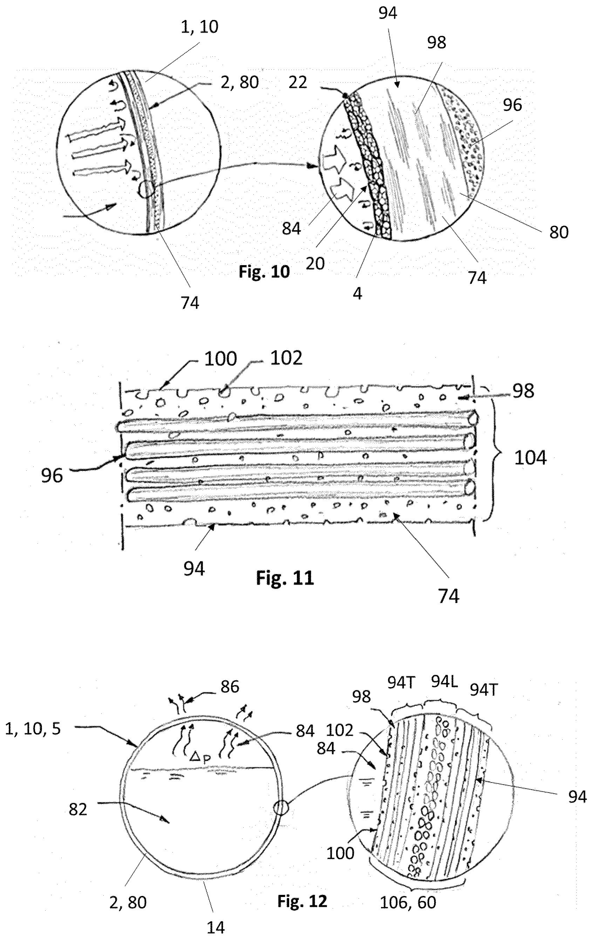

Fig. 9 shows the situation as in Fig. 8 wherein the tank wall 80 is provided with the graphene layer 4 in accordance with embodiments of the invention. Fig. 10 shows a lower part of the tank wall provided with the graphene layer 4 which is electrically connected to ground 88.

An embodiment of the CFRP LH2 tank 10 as shown in Figs. 9 and 10 includes a multi-functional inner layer 4 of graphene for suppression of static electricity build-up as well as suppression of permeation. The graphene layer 4 is electrically grounded (i.e., electrically connected to earth).

Fig. 9 shows the inner graphene layer 4 in the CFRP LH2 tank 10, wherein a section of the tank 10 is shown in the left illustration, and a detail depicted on the right side of Fig. 10 shows how charged particles of the material surface are led to earth, thus the charged particles in the liquid get dispersed. Especially, Fig. 9 shows a liquid hydrogen tank 10 in accordance with an embodiment of the invention. To the left a partial cross-section through the tank 10 is seen, with liquid hydrogen and gaseous hydrogen. The tank 10 has the inner surface layer 4 of graphene (a graphene "liner"). To the right a detail is seen of a section with liquid hydrogen 82. It is seen that the charged surface particles 90 are led away in the graphene layer 4, which is connect to ground (earth) 88. Once they are led away the oppositely charged particles 92 in the liquid get dispersed, and so no build-up of a charge can take place any longer.

Fig. 10 illustrates the permeation suppression in the CFRP LH2 tank 10 by the graphene layer 4. In more detail, Fig. 10 shows the same liquid hydrogen tank 10 as in Fig. 9, i.e., a CFRP tank 10 with a graphene inner layer (liner) 4 however here focussing on permeation. To the left, a partial section is shown with an overpressure of hydrogen gas 84. To the right a detail shows that gas that would permeate without the graphene layer 4, here is hindered from penetrating the graphene layer 4.

Hence, there are several advantages in applying a graphene layer 4 to wall components 14 of hydrogen receptacles 1 some of them are listed in the following:
- Enabling of a fast filling through pipes 5 and tank 10 with liquid hydrogen, with static electricity build-up suppressed by the graphene layer 4 (grounded)
- Quicker permeation of hydrogen through CFRP tank cross section is slowed down considerably by the graphene layer 4
- the graphene layer 4 is multi-functional by suppressing both static electricity as well as permeation
- the graphene layer 4 is well compatible with CFRP
- Enabling of a CFRP tank 10 with considerable weight saving.

For applying the graphene layer 4, embodiments of the manufacturing method make use of graphene flakes 68 ready in solvent and a spray gun 72. An embodiment of the manufacturing method comprises the steps of
- applying the graphene layer 4 on CFRP inner material (weave or tape), by, e.g., spraying
- verify electrical ground function
- verify permeation suppression.

However, applying a graphene layer to fibre reinforced composite material of or for a wall component 14 of a hydrogen receptacle provides even more advantages as listed above. Those further effects and advantages are explained in more detail in the following.

Fig. 11 shows a sectional view through a wall material 74 for the wall component 14 of the hydrogen receptacle 1 made of CFRP being still uncoated in order to illustrate potential issues of a porosity of the CFRP material.

Fig. 11 shows a typical cross-section of a carbon fibre reinforced plastic (CFRP). Especially, a ply 94 is shown as an example for the wall material 74. The ply 94 has a polymer matrix and carbon fibres 96 embedded therein. The ply 94 has resin rich layers 98. On the surface thereof, there areas of a pore free surface and areas with open pores 102 in the surface. The total thickness 104 of the ply 94 varies typically between 0.02 mm (ultra-thin) and 0.25 mm (thick). Typical standard thicknesses are, 0.125 mm (thin), 0.195 mm (medium), and 26 mm (thick). Thicknesses below 0.125 mm are defined as "thin plies".

In the resin various pores are usually present, defined by a porosity content. This is dependent on the curing process, and includes parameters such as pressure and temperature during curing. The pores may vary in size from 4 mm up to appr. 60 mm. The pores are present within the resin, and may appear in the surface as open pores 102, such as seen in Fig. 11. Fig. 11 shows a cross-section of a typical CFRP ply 94 with pores shown internally as well as crossing the surface.

Fig. 12 shows a cross-section of a cylindrically shaped liquid hydrogen tank 10 built of a laminated CFRP shell on the left side. The situation is shown where the tank wall 80 is manufactured with a CFRP laminate 106 of several plies 94 as shown in Fig. 11 without surface treatment. The tank 10 is partially filled with liquid hydrogen 82 and to a part with gaseous hydrogen 84. An over pressure of Δp bar exists in the tank 10. Permeation of hydrogen 86 takes place through the CFRP laminate 106.

To the right a detail of the CFRP laminate 106 is shown, here for simplicity with only three plies 94, 94T, 94L, two transverse 94T and one longitudinal 94L. On the inside of the shell, a surface 20 with some open pores 102 is visible.

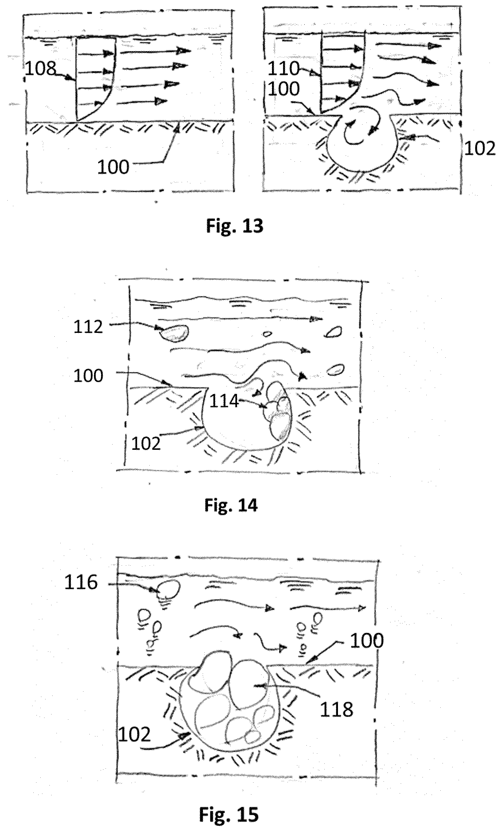

Fig. 13 illustrates the fluid dynamics with a porous surface as it would happen when using the CFRP laminate 106 without surface treatment of the inner ply 94 thereof. Fig. 13 illustrates a liquid flow over a smooth surface (left) displaying laminar flow 108, and over a void (right) displaying turbulent flow 110 near the void.

Given a liquid hydrogen tank 10 built of CFRP and no particular liner installed on the inside of the CFRP pressure vessel, we obtain the case of a fluid acting on a porous surface. We will here summarize the physics of this case in the particular case of a pressure vessel, to be filled with a liquid medium which will be repeatedly filled and evacuated.

Fig. 13 shows a liquid flowing nearby a solid surface that is smooth (left). The liquid velocity 108 is shown by means of a velocity diagram as function of the distance to the surface. Right at the surface 20 the velocity of the liquid is zero, and it increase by a parabolic function of the distance. The flow in the liquid is here laminar at all distances.

To the right a surface 20 with a void is shown, here made up by an open pore 102 in the CFRP resin at the surface 20. It can here be seen that a turbulent flow is taking place near the surface, and the distribution 110 of the flow velocity is also changed.

For liquid pressure vessels in operation over years with multiple evacuations and refilling experience has shown that tiny particles 112 may build up on the inside of the pressure vessel. In particular this has proven to be the case at voids in surfaces. Fig. 14 shows the case of an open pore 102 with tiny particle build-up 114. The particles 112, 114 can be foreign materials transported with the liquid medium, or can be the result of chemical reactions. The particle build-up 114 can contribute to further turbulent flow.

For maintaining proper function over longer time, it is advantageous to be able to either clean the inner tank surface 20 from undesired particle build-up 114, (which is often performed by flushing the tank 10); since pressure vessels are often designed so as not to be disassembled, the best option is to utilize such an inner surface 20 that permits as little particle build-up 114 as possible. Clean surfaces are essential to rapid filling and evacuation under laminar flow.

Experience has also proven that tiny bubbles 116, 118 will develop, in particular at high liquid velocities, and at obstacles. In voids, bubbles 116 may be arrested and may gather in such a manner that they remain, see Fig. 15. In such cases, bubble build-up 118 can contribute to further turbulent flow. Fig. 15 shows bubbles 118 trapped in open voids inside the tank 10, contributing to turbulent flow.

Also here applies that an inner tank surface 20 that does not permit bubbles 116 to be trapped and bubble-build-up 118 is a preferred option.

Such advantageous smooth surfaces 20 can be achieved by the graphene coating 22.

A 2D layer of one atom thickness of carbon is defined as "graphene". Within the last 20 years, graphene has been intensively researched, and found to possess numerous interesting characteristics.

The manufacturing of graphene layers 4 involve chemical exfoliation from graphite, and is described in the literature. Graphene can be provided e.g., in limited "flakes", see Fig. 6.

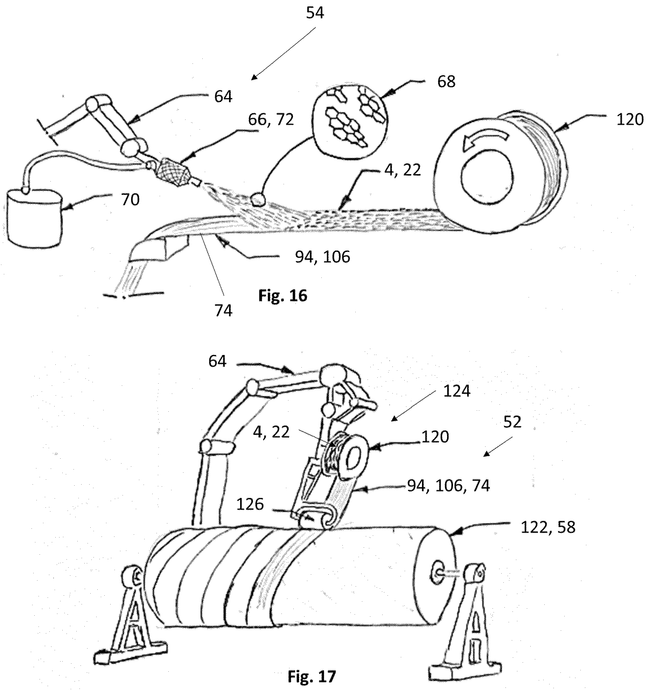

For practical applications, graphene can be applied on a material surface 20 as a layer 4. Such a graphene layer 4 may consist of a multitude of graphene flakes 68 that are e.g., sprayed on to the surface, see Fig. 5 or Fig. 16 which illustrates the step of applying graphene according to another embodiment of the manufacturing method.

Fig. 16 shows an embodiment capable of performing the method according to the invention of the graphene applying unit 54 wherein graphene is applied on the wall material 74 before the wall component 14 is formed from the wall material 74. As described before referring to Figs. 4 and 5, the graphene applying unit 54 comprises the robotic arm 64 and the graphene spray head 66 with the container 70 with solvent as graphene flake source and the spray gun 72 with a spraying nozzle. Fig. 16 further shows the CFRP laminate 106 in form of a tape, a material spool 120 containing rolled CFRP tape with graphene coating 22.

In other instances, different processes can be used for applying graphene onto a substrate, such as e.g., additive manufacturing with dispersed graphene particles, or using graphene bucky paper.

A CFRP tape coated with graphene has proven to possess several beneficial characteristics, such as smooth surface texture, mechanical, thermal and electrical properties.

With manufacturing methods according to embodiments of the invention, one can achieve an inside coating 22 of a CFRP LH2 tank 10, that is sufficiently free of voids so as enable a long term maintenance of the inner tank surface 20, virtually free of: voids causing turbulent flow, particle build-up and bubble build-up, that both can cause added turbulent flow, by applying an inner layer 4 of graphene, e.g. by spraying of graphene flakes 68 in a multitude of atom-layers, multi-functionally also suppressing hydrogen permeation, the graphene layer 4 still being very thin compared to any metal layer, and displaying good material compatibility with the CFRP as a substrate. Advantageously, a clean tank inner surface 20 is achieved, with easy maintenance, enabling rapid filling and evacuation, taking place under laminar flow near the surface.

Fig. 17 shows a CFRP laminate 106 in form of a tape being laid down on a mandrel 122 (example for forming tool) within the first steps of a manufacturing process of building a CFRP cylindrical LH2 tank 10. For simplicity it is here assumed that the cylindrical region is made by CFRP and the conical end domes of metal. The principles discussed here apply as well to complete CFRP LH2 tanks.

In Fig. 17 it is seen that the innermost ply 94 is laid down in a winding process involving a tape laying head 124, the material spool 120 and a robotic arm 64. The mandrel 122 rotates and provides the shape of the tank 10. The tape used for the innermost ply is a CFRP tape coated with a graphene layer 4, as shown in Fig. 16, in this instance by spraying a multitude of graphene flakes 68 onto the tape, providing an even and virtually void free coating. The tape laying head 124 holds the material spool 120 and comprises a compaction roller 126 configured to press the tape onto the mandrel 122.

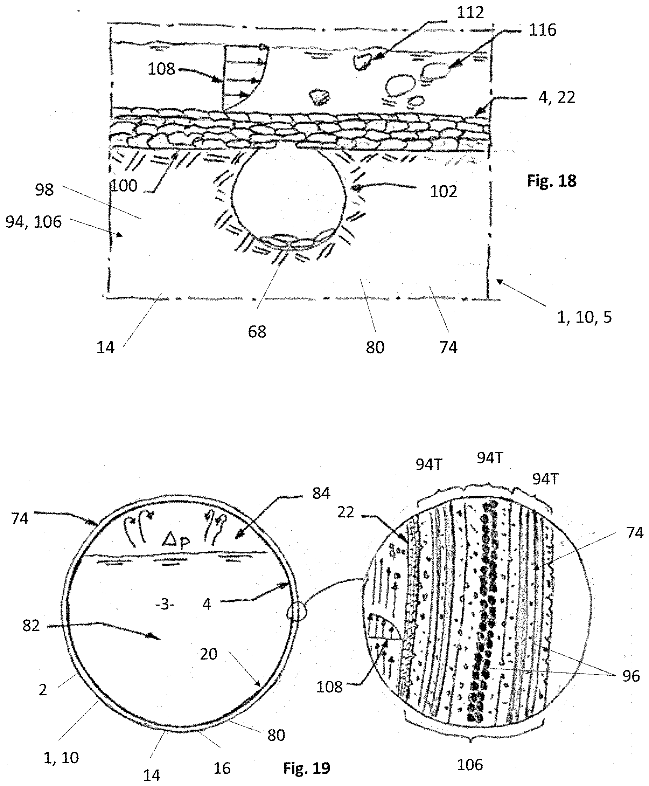

Fig. 18 shows a detail of the innermost CFRP ply 94, used as the inner surface 20 in the LH2 tank 10. In the picture a void 102 is seen. The surface 20 is covered by a coating 22 of graphene, e.g., applied by the spraying procedure shown in Fig. 16. For larger voids the carbon flakes 68 in the first flake layer will fall through, but layer by layer, the void is getting covered. It should be noted that the number of flake layers seen here are simplified, and will in reality be considerably larger.

Fig. 19 shows a cross-section of the resulting CFRP LH2 tank 10 (left), with a coating 22 of graphene on the innermost ply 94, 94T. The detail of the CFRP laminate 106 (right) displays the graphene coating 22, in this instance applied by spraying graphene flakes 68. In the detail it is seen that the smooth surface of the graphene coating 22 results in laminar liquid flow 108, and that any particles 112 in the liquid are not causing build-up, and there is no bubble build-up. In the cross-section is seen that the hydrogen permeation is reduced by the graphene layer 4 (left). Fig. 19 shows a cross-section of the CFRP LH2 tank 10 with graphene coating 22 on the inside (left) and detail of CFRP laminate 106 including the graphene coating 22 (right) displaying full laminar flow 108, no particle build-up and no bubble build-up, and the reduced hydrogen permeation is indicated (left).

Hence, some advantages of applying graphene coating 22 to a wall material 74 of a hydrogenic receptacle 1 are:
- Graphene coating 22 enables laminar flow without voids
- Graphene coating 22 suppresses particle build-up in voids
- Graphene coating 22 suppresses bubble build-up in voids
- Graphene coating 22 enhances maintenance and tank cleaning procedures
- Graphene coating 22 reduces hydrogen permeation through CFRP laminate
- Graphene coating 22 displays high compatibility with CFRP materials
- Graphene coating 22 may suppress static electricity in CFRP LH2 tank 10 Advantageous technical means for manufacturing the graphene coated hydrogen receptacle wall component are:
- a carbon fibre reinforced plastic composite tape as wall material
- for inner ply: graphene material to apply, e.g., graphene flakes 68
- a tape laying head 124
- a robotic arm 64
- a mandrel 122

Embodiments of the methods for manufacturing and operation comprise the following steps:
- apply graphene layer 4 on CFRP tape, in one instance by spraying graphene material in form of flakes 68 on to the tape, inspect surface for voids
- wind inner layer of CFRP LH2 tank with CFRP tape with graphene layer 4 applied
- wind remaining CFRP plies 94, 94T, 94L
- complete LH2 tank 10, e.g., with possible end domes 18 of metal
- test CFRP LH2 tank 10 under pressure
- for longer terms; test tank 10 for permeation
- inspect tank 10 inside for particle build-up, perform regular maintenance/cleaning of tank 10

In order to improve operation and functionality of a hydrogen system, especially for aircrafts, the invention provides manufacturing methods for components (14) of the receptacle (1) and for the receptacle (1) itself.

### Reference sign list:

- 1: hydrogen receptacle
- 2: receptacle wall
- 3: volume for storing or conducting hydrogen
- 4: layer of graphene
- 5: hydrogen pipe
- 10: hydrogen tank
- 12: vehicle
- 14: wall component
- 16: cylindrical part
- 18: end cap
- 20: inner surface
- 22: graphene coating
- 26: engine
- 42: turbine
- 44: airplane
- 46: propulsion system
- 50: manufacturing apparatus
- 52: wall component manufacturing unit
- 54: graphene applying unit
- 56: tank assembly unit
- 58: winder
- 60: laminate
- 62: polar opening
- 64: robotic arm
- 66: graphene spray head
- 68: graphene flake
- 70: container
- 72: spray gun
- 74: wall material
- 76: liquid
- 78: liquid container
- 80: tank wall
- 82: LH2
- 84: gaseous hydrogen
- 86: permeated hydrogen
- 88: ground
- 90: charged particles at the surface
- 92: charged particles in the liquid
- 94: ply
- 94T: CFRP ply with transverse fibres
- 94L: CFRP ply with longitudinal fibres
- 96: carbon fibre
- 98: resin rich layer
- 100: pore free surface
- 102: open pore in surface (void)
- 104: total thickness
- 106: CFRP laminate
- 108: liquid flow velocity distribution, fully laminar
- 110: liquid flow velocity distribution, partly turbulent
- 112: particle flowing in liquid medium
- 114: particle build-up in open void, contributing to turbulent flow
- 116: bubble in liquid medium
- 118: bubble build-up in open void, contributing to turbulent flow
- 120: material spool
- 122: forming tool
- 124: tape laying head
- 126: compaction roller

## Claims

1. Manufacturing method for manufacturing a hydrogen receptacle wall component (14), comprising the steps of:
a) providing a wall material (74) made from fibre reinforced composite material,
b) coating the wall material (74) with a graphene layer (4), and
c) forming the hydrogen receptacle wall component (14) from the wall material (74), **characterized in that** step b) is conducted before step c), ,
wherein step a) comprises:
a1) providing a tape made from fibre reinforced composite material, **in that** step b) comprises.
b1) covering one side of the tape from fibre reinforced composite material with graphene, and
**in that** step c) comprises
c1) applying several layers of wall material (74) onto a forming tool, especially a mandrel (122), wherein a first layer in form of the tape coated with graphene is applied with the graphene coated side contacting the forming tool.

2. Manufacturing method according to claim 1, **characterized in that** step a) comprises
a2) providing a laminate (106) from CFRP in form of the tape,
**in that** step b) comprises:
b2) rolling the CFRP tape with graphene coating (22) onto a material spool (120), and
**in that** step c) comprises:
c2) laying down the first layer in a winding process involving a tape laying head (124), the material spool (120) and a robotic arm (64).

3. Manufacturing method according to any of the claims 1 or 2, **characterized in that** step b) comprises at least one of the steps:
b3) covering voids (102) of the fibre reinforced composite material with the graphene layer (4),
b4) coating an inner surface (20) of the wall material (74) which in use forms an inner receptacle wall surface (20) with the graphene layer (4),
b5) spraying of multiple graphene flakes (68).

4. Manufacturing method according to any of the claims 1 to 3, **characterized in that** step c) comprises at least one of the steps:
c3) pressing the wall material (74) against the forming tool with a compaction tool, especially a compaction roller (126),
c4) forming the wall material (74) to a cylindrical wall,
c5) wind an inner layer of CFRP LH2 tank (10) with the tape, especially a CFRP tape, with graphene layer (4) applied and then wind remaining CFRP plies (94T, 94L) on the mandrel (122),
c6) curing the wall material (74) after forming.

5. Hydrogen receptacle manufacturing method for manufacturing a hydrogen receptacle (1) for a vehicle, especially an aircraft, wherein the hydrogen receptacle (1) comprises a receptacle wall (2) made from fibre reinforced composite material defining a volume (3) for storing or conducting hydrogen, especially liquid hydrogen (82), the hydrogen receptacle manufacturing method comprising the steps of:
aa) conducting the manufacturing method according to any of the claims 1 to 4 in order to provide at least one or several wall components (14) and
d) assembling several wall components (14) in order to achieve the hydrogen receptacle (1).

6. Hydrogen receptacle manufacturing method according to claim 5, **characterized in that** it is
6.1 a hydrogen tank manufacturing method for manufacturing a hydrogen tank (10) for storing hydrogen, especially liquid hydrogen (82) or
6.2 a hydrogen pipe manufacturing method for manufacturing a hydrogen pipe (5) for conducting hydrogen, especially liquid hydrogen (82).

7. Hydrogen receptacle manufacturing method according to any of the claims 5 or 6, **characterized in that** step aa) is conducted such that one or several cylindrical tank components are provided.

8. Hydrogen receptacle manufacturing method according to any of the claims 5 to 7, **characterized in that** step d) comprises assembling at least one cylindrical wall component (14) achieved by step aa) and a first and a second dome shaped end component, especially from metal, in order to achieve a hydrogen tank (10) as receptacle.

9. Hydrogen receptacle manufacturing method according to any of the claims 5 to 8, comprising at least one of the following additional steps:
g) testing the hydrogen receptacle (1) under pressure,
h) testing the hydrogen receptacle (1) for permeation.

10. Method according to any of the claims 1 to 9, comprising at least one or several of the following additional steps:
e) verifying electrical ground function of the graphene layer (4),
f) verifying permeation suppression of the graphene layer (4).

11. Aircraft comprising at least one hydrogen consumer and at least one hydrogen receptacle (1) comprising at least one hydrogen receptacle wall component (14) achieved by the method according to any of the claims 1 to 4 or a hydrogen receptacle (1) achieved by the method according to any of the claims 5 to 10.

## Patentansprüche

1. Herstellungsverfahren zum Herstellen einer Wasserstoffbehälterwandkomponente (14), das die folgenden Schritte umfasst:
a) Bereitstellen eines Wandmaterials (74) aus faserverstärktem Verbundmaterial,
b) Beschichten des Wandmaterials (74) mit einer Graphenschicht (4), und
c) Ausbilden der Wasserstoffbehälterwandkomponente (14) aus dem Wandmaterial (74), **dadurch gekennzeichnet, dass** Schritt b) vor Schritt c) durchgeführt wird,
wobei Schritt a) Folgendes umfasst:
a1) Bereitstellen eines Bandes aus faserverstärktem Verbundmaterial,
dadurch, dass Schritt b) Folgendes umfasst.
b1) Bedecken einer Seite des Bandes aus faserverstärktem Verbundmaterial mit Graphen, und
dadurch, dass Schritt c) Folgendes umfasst c1) Aufbringen mehrerer Schichten aus Wandmaterial (74) auf ein Formwerkzeug, insbesondere einen Dorn (122), wobei eine erste Schicht in Form des mit Graphen beschichteten Bandes mit der mit Graphen beschichteten Seite in Kontakt mit dem Formwerkzeug aufgebracht wird.

2. Herstellungsverfahren nach Anspruch 1, **dadurch gekennzeichnet, dass** Schritt a) Folgendes umfasst
a2) Bereitstellen eines Laminats (106) aus CFRP in Form des Bandes,
dadurch, dass Schritt b) Folgendes umfasst:
b2) Aufrollen des CFRP-Bandes mit der Graphenbeschichtung (22) auf eine Materialspule (120), und
dadurch, dass Schritt c) Folgendes umfasst:
c2) Ablegen der ersten Schicht in einem Wickelprozess, der einen Bandablegekopf (124), die Materialspule (120) und einen Roboterarm (64) beinhaltet.

3. Herstellungsverfahren nach einem der Ansprüche 1 oder 2, **dadurch gekennzeichnet, dass** Schritt b) mindestens einen der folgenden Schritte umfasst:
b3) Bedecken von Hohlräumen (102) des faserverstärkten Verbundmaterials mit der Graphenschicht (4),
b4) Beschichten einer Innenfläche (20) des Wandmaterials (74), die im Gebrauch eine Innenbehälterwandfläche (20) bildet, mit der Graphenschicht (4),
b5) Aufsprühen mehrerer Graphenflocken (68).

4. Herstellungsverfahren nach einem der Ansprüche 1 bis 3, **dadurch gekennzeichnet, dass** Schritt c) mindestens einen der folgenden Schritte umfasst:
c3) Pressen des Wandmaterials (74) gegen das Formwerkzeug mit einem Verdichtungswerkzeug,
insbesondere einer Verdichtungswalze (126), c4) Ausbilden des Wandmaterials (74) zu einer zylindrischen Wand,
c5) Wickeln einer Innenschicht des CFRP-LH2-Tanks (10) mit dem Band, insbesondere einem CFRP-Band, mit einer aufgebrachten Graphenschicht (4) und dann Wickeln verbleibender CFRP-Lagen (94T, 94L) auf den Dorn (122);
c6) Aushärten des Wandmaterials (74) nach dem Ausbilden.

5. Wasserstoffbehälterherstellungsverfahren zum Herstellen eines Wasserstoffbehälters (1) für ein Fahrzeug, insbesondere ein Luftfahrzeug, wobei der Wasserstoffbehälter (1) eine Behälterwand (2) aus faserverstärktem Verbundmaterial umfasst, die ein Volumen (3) zum Speichern oder Leiten von Wasserstoff, insbesondere flüssigem Wasserstoff (82), definiert, wobei das Wasserstoffbehälterherstellungsverfahren die folgenden Schritte umfasst:
aa) Durchführen des Herstellungsverfahrens nach einem der Ansprüche 1 bis 4, um mindestens eine oder mehrere Wandkomponenten (14) bereitzustellen, und
d) Zusammenbauen mehrerer Wandkomponenten (14), um den Wasserstoffbehälter (1) zu erhalten.

6. Wasserstoffbehälterherstellungsverfahren nach Anspruch 5, **dadurch gekennzeichnet, dass** es Folgendes ist
6.1 ein Wasserstofftankherstellungsverfahren zur Herstellung eines Wasserstofftanks (10) zum Speichern von Wasserstoff, insbesondere flüssigem Wasserstoff (82), oder
6.2 ein Wasserstoffrohrherstellungsverfahren zur Herstellung eines Wasserstoffrohrs (5) zum Leiten von Wasserstoff, insbesondere flüssigem Wasserstoff (82).

7. Wasserstoffbehälterherstellungsverfahren nach einem der Ansprüche 5 oder 6, **dadurch gekennzeichnet, dass** Schritt aa) so durchgeführt wird, dass ein oder mehrere zylindrische Tankkomponenten bereitgestellt werden.

8. Wasserstoffbehälterherstellungsverfahren nach einem der Ansprüche 5 bis 7, **dadurch gekennzeichnet, dass** Schritt d) Zusammenbauen mindestens einer durch Schritt aa) erhaltenen zylindrischen Wandkomponente (14) und einer ersten und einer zweiten kuppelförmigen Endkomponente, insbesondere aus Metall, umfasst, um einen Wasserstofftank (10) als Behälter zu erhalten.

9. Wasserstoffbehälterherstellungsverfahren nach einem der Ansprüche 5 bis 8, das mindestens einen der folgenden zusätzlichen Schritte umfasst:
g) Prüfen des Wasserstoffbehälters (1) unter Druck,
h) Prüfen des Wasserstoffbehälters (1) auf Permeation.

10. Verfahren nach einem der Ansprüche 1 bis 9, das mindestens einen oder mehrere der folgenden zusätzlichen Schritte umfasst:
e) Verifizieren einer elektrischen Massefunktion der Graphenschicht (4),
f) Verifizieren der Permeationsunterdrückung der Graphenschicht (4).

11. Luftfahrzeug, das mindestens einen Wasserstoffverbraucher und mindestens einen Wasserstoffbehälter (1) umfasst, der mindestens eine Wasserstoffbehälterwandkomponente (14), die durch das Verfahren nach einem der Ansprüche 1 bis 4 erhalten wurde, oder einen Wasserstoffbehälter (1), der durch das Verfahren nach einem der Ansprüche 5 bis 10 erhalten wurde, umfasst.

## Revendications

1. Procédé de fabrication pour fabriquer un composant de paroi de réceptacle d'hydrogène (14), comprenant les étapes consistant à :
a) fournir un matériau de paroi (74) en matériau composite renforcé par des fibres,
b) revêtir le matériau de paroi (74) d'une couche de graphène (4), et
c) former le composant de paroi de réceptacle d'hydrogène (14) à partir du matériau de paroi (74), **caractérisé en ce que** l'étape b) est conduite avant l'étape c), l'étape a) comprenant :
a1) la fourniture d'un ruban en matériau composite renforcé par des fibres,
**en ce que** l'étape b) comprend
b1) la couverture d'un côté du ruban en matériau composite renforcé par des fibres avec du graphène, et
**en ce que** l'étape c) comprend
c1) l'application de plusieurs couches de matériau de paroi (74) sur un outil de formage, en particulier un mandrin (122), dans lequel une première couche sous la forme du ruban revêtu de graphène est appliquée, le côté revêtu de graphène étant en contact avec l'outil de formage.

2. Procédé de fabrication selon la revendication 1, **caractérisé en ce que** l'étape a) comprend a2) la fourniture d'un stratifié (106) en CFRP sous la forme du ruban,
**en ce que** l'étape b) comprend :
b2) le laminage du ruban de CFRP avec un revêtement de graphène (22) sur une bobine de matériau (120), et
**en ce que** l'étape c) comprend :
c2) le dépôt de la première couche dans un processus d'enroulement impliquant une tête de dépôt de ruban (124), la bobine de matériau (120) et un bras robotique (64).

3. Procédé de fabrication selon l'une quelconque des revendications 1 ou **2, caractérisé en ce que** l'étape b) comprend au moins une des étapes consistant à :
b3) couvrir des vides (102) du matériau composite renforcé par des fibres avec la couche de graphène (4), b4) revêtir une surface interne (20) du matériau de paroi (74) qui, en utilisation, forme une surface de paroi de réceptacle interne (20) avec la couche de graphène (4), b5) pulvériser de multiples flocons de graphène (68).

4. Procédé de fabrication selon l'une quelconque des revendications 1 à 3, **caractérisé en ce que** l'étape c) comprend au moins une des étapes consistant à :
c3) presser le matériau de paroi (74) contre l'outil de formage avec un outil de compactage, en particulier un rouleau de compactage (126),
c4) former le matériau de paroi (74) sur une paroi cylindrique,
c5) enrouler une couche interne de réservoir de CFRP LH2 (10) avec le ruban, en particulier un ruban de CFRP, avec une couche de graphène (4) appliquée et ensuite enrouler des plis CFRP restants (94T, 94L) sur le mandrin (122) ;
c6) durcir le matériau de paroi (74) après la formation.

5. Procédé de fabrication de réceptacle d'hydrogène pour fabriquer un réceptacle d'hydrogène (1) pour un véhicule, en particulier un aéronef, le réceptacle d'hydrogène (1) comprenant une paroi de réceptacle (2) en matériau composite renforcé par des fibres définissant un volume (3) pour stocker ou conduire de l'hydrogène, en particulier de l'hydrogène liquide (82), le procédé de fabrication de réceptacle d'hydrogène comprenant les étapes consistant à :
aa) conduire le procédé de fabrication selon l'une quelconque des revendications 1 à 4 afin de fournir au moins un ou plusieurs composants de paroi (14) et
d) assembler plusieurs composants de paroi (14) pour obtenir le réceptacle d'hydrogène (1).

6. Procédé de fabrication de réceptacle d'hydrogène selon la revendication 5, **caractérisé en ce qu'**il est
6.1 un procédé de fabrication de réservoir d'hydrogène pour fabriquer un réservoir d'hydrogène (10) afin de stocker de l'hydrogène, en particulier de l'hydrogène liquide (82) ou
6.2 un procédé de fabrication de tuyau d'hydrogène pour fabriquer un tuyau d'hydrogène (5) afin de conduire de l'hydrogène, en particulier de l'hydrogène liquide (82).

7. Procédé de fabrication de réceptacle d'hydrogène selon l'une quelconque des revendications 5 ou 6, **caractérisé en ce que** l'étape aa) est conduite de telle sorte qu'un ou plusieurs composants de réservoir cylindriques soient prévus.

8. Procédé de fabrication de récipient d'hydrogène selon l'une quelconque des revendications 5 à 7, **caractérisé en ce que** l'étape d) comprend l'assemblage d'au moins un composant de paroi cylindrique (14) obtenu par l'étape aa) et d'un premier et d'un deuxième composant d'extrémité en forme de dôme, en particulier en métal, afin d'obtenir un réservoir d'hydrogène (10) en tant que réceptacle.

9. Procédé de fabrication de réceptacle d'hydrogène selon l'une quelconque des revendications 5 à 8, comprenant au moins l'une des étapes supplémentaires suivantes consistant à :
g) tester le réceptacle d'hydrogène (1) sous pression,
h) tester la perméation du réceptacle d'hydrogène (1).

10. Procédé selon l'une quelconque des revendications 1 à 9, comprenant au moins une ou plusieurs des étapes supplémentaires suivantes consistant à :
e) vérifier une fonction de masse électrique de la couche de graphène (4),
f) vérifier la suppression de perméation de la couche de graphène (4).

11. Aéronef comprenant au moins un consommateur d'hydrogène et au moins un réceptacle d'hydrogène (1) comprenant au moins un composant de paroi de réceptacle d'hydrogène (14) obtenu par le procédé selon l'une quelconque des revendications 1 à 4 ou un réceptacle d'hydrogène (1) obtenu par le procédé selon l'une quelconque des revendications 5 à 10.
